Europäisches Patentamt

European Patent Office

Office européen des brevets

(11) Veröffentlichungsnummer: **0 439 654 A1**

# EUROPÄISCHE PATENTANMELDUNG

(21) Anmeldenummer: **90101917.4**

(51) Int. Cl.5: **G05B 19/405**

(22) Anmeldetag: **31.01.90**

(43) Veröffentlichungstag der Anmeldung:
**07.08.91 Patentblatt 91/32**

(84) Benannte Vertragsstaaten:
**AT BE CH DE DK ES FR GB GR IT LI LU NL SE**

(71) Anmelder: **Siemens Aktiengesellschaft**
**Wittelsbacherplatz 2**
**W-8000 München 2(DE)**

(72) Erfinder: **Höhn, Georg, Dipl.-Math., Dipl.-Ing.**
**Gosberg 92**
**W-8551 Pinzberg(DE)**
Erfinder: **Adolphs, Peter, Dipl.-Ing.**
**Tiergartenstrasse 9**
**W-5438 Westerburg(DE)**

(54) **Verfahren zur kollisionsvermeidenden Steuerung von aufgabenorientiert programmierten Robotern.**

(57) Aufgabenorientiert programmierte Roboter sollen komplexe Befehle, wie z.B. "bringe Werkstück A von Tisch zu Förderband", ausführen können. Die nach Eingabe des Befehls vom Roboter selbsttätig durchzuführende Bahnplanung muß dabei Objekte (O), die sich im Arbeitsraum des Roboters befinden, kollisionsvermeidend umgehen. Die Robotersteuerung kann dazu auf eine Objekttabelle zugreifen, in der Objektbereiche (OB) abgespeichert sind, die im Abschattungsbereich eines Objekts (O) liegen und damit für den Roboter nicht erreichbar sind. Durch die Umgehung der Objektbereiche (OB) bei der Ausführung einer Roboterbewegung ist automatisch gewährleistet, daß der Roboter mit keinem Teil seines konstruktiven Aufbaus an ein Objekt (O) im Arbeitsraum stößt.

FIG 6

EP 0 439 654 A1

# VERFAHREN ZUR KOLLISIONSVERMEIDENDEN STEUERUNG VON AUFGABENORIENTIERT PROGRAMMIERTEN ROBOTERN

Unter aufgabenorientiert programmierten Robotern werden im Sinne dieser Anmeldung Robotersysteme verstanden, die so programmiert sind, das sie komplexe Befehle wie z.B. "bringe Werkstück A von Tisch 1 zu Förderband", selbständig ausführen können. Der "Roboter" ist im weitesten Sinne zu verstehen. Er umfaßt alle für das Verfahren verwendbaren Handhabungsgeräte sowie - auch numerisch gesteuerte - Werkzeugmaschinen, wenn diese auch nur eine Achse aufweisen, die aufgabenorientiert steuerbar ist.

Im Gegensatz zum sogenannten "Teachen", bei dem ein Roboter von einer Bedienperson zunächst auf einer vorgegebenen Bahn geführt wird, worauf die Robotersteuerung in die Lage versetzt wird, eine einmal geteachte Bahn selbsttätig zu wiederholen, werden der Robotersteuerung eines aufgabenorientiert programmierten Roboters einmalig prinzipielle Eigenschaften des Roboters und des Arbeitsraumes, der dem Roboter in Abhängigkeit von seinem geometrischen Aufbau zur Verfügung steht, mitgeteilt. Diese Grundeigenschaften können in die Robotersteuerung bereits vom Hersteller implementiert werden. Am tatsächlichen Einsatzort eines aufgabenorientiert programmierten Roboters müssen dann die prinzipiellen Eigenschaften noch an die tatsächlich vorgefundenen Umweltbedingungen angepaßt werden. Das bedeutet beispielsweise, daß der Robotersteuerung alle Objekte, die sich im Arbeitsraum des Roboters befinden, mitgeteilt werden müssen, damit diese bei einer jeweiligen Roboterbewegung berücksichtigt werden können, so daß es nicht zu einer Kollision mit den Objekten und dem Roboter kommt.

Aufgrund der prinzipiellen Eigenschaften und der aktuell vorgefundenen Umweltbedingungen bzw. der aktuell vorgefundenen Objekten im Arbeitsraum des Roboters kann die Robotersteuerung komplexe Befehle, wie beispielsweise den eingangs erwähnten Befehl - "bringe Werkstück A von Tisch 1 zu Förderband" - ausführen und entweder im off-line-Betrieb vor der Ausführung einer Bewegung oder on-line alle dazwischenliegenden Hindernisse berücksichtigen und umgehen, so daß es zu keinen Kollisionen mit dem Roboter und Objekten kommt.

Bisherige Verfahren zur Steuerung von aufgabenorientiert programmierten Robotern benötigen - insbesondere dann, wenn sich die aktuellen Objekte im Arbeitsraum des Roboters auch noch bewegen -, so lange Rechenzeiten, daß eine on-line-Anwendung bisher noch nicht möglich war.

Aufgabe der Erfindung ist es deshalb ein Verfahren zur kollisionsvermeidenden Steuerung von aufgabenorientiert programmierten Robotern zu schaffen, bei dem die Rechenzeit für eine Bahnplanung des Roboters reduziert wird.

Diese Aufgabe wird durch ein Verfahren zur kollisionsvermeidenden Steuerung von aufgabenorientiert programmierten Robotern mit folgenden Merkmalen gelöst:

a) Im Arbeitsraum des Roboters werden Objektbereiche die vom Roboter aufgrund von möglichen Objekten im Arbeitsraum nicht erreichbar sind, lokalisiert,

b) jeder Objektbereich wird durch verschieden große vorgebbare Raumelemente so beschrieben, daß die Anzahl der Raumelemente minimiert ist,

c) die Raumelemente werden in einer Objekttabelle abgespeichert,

d) bei der Ausführung einer Roboterbewegung werden von der Robotersteuerung aus der Objekttabelle die Raumelemente, die in der Bewegungsbahn des Roboters liegen, kollisionsvermeidend berücksichtigt.

Eine vorteilhafte Ausbildung des Verfahrens ist dadurch gekennzeichnet, daß mindestens zwei aneinander angrenzende Objektbereiche zu einem Objektbereich zusammengefaßt werden. Durch die Zusammenfassung von angrenzenden Objektbereichen läßt sich der entstehende größere Objektbereich beispielsweise durch größere Raumelemente beschreiben, so daß der Speicherplatzbedarf der Objekttabelle weiter reduziert wird.

Eine weitere vorteilhafte Ausbildung der Erfindung ist dadurch gekennzeichnet, daß nur die Abmessungen der Raumelemente in der Objekttabelle gespeichert werden, die die Oberfläche des durch die Raumelemente eingenommenen Volumens bilden. Da es nicht notwendig ist, daß der Roboter auch Punkte oder Bereiche innerhalb eines durch die Raumelemente beschriebenen Objektbereichs kennt, weil er diese sowieso nicht erreichen kann, genügt es, wenn der Robotersteuerung nur die Oberfläche bzw. die Begrenzungen des nicht erreichbaren Volumens zur Verfügung stehen.

Im on-line-Betrieb braucht die Robotersteuerung nur jeweils die Objekte berücksichtigen, die sich auch tatsächlich im Arbeitsraum des Roboters befinden. Die zu diesen aktuellen Objekten korrespondierenden Raumelemente können deshalb in einer aktuellen Objekttabelle gespeichert werden, so daß die Robotersteuerung bei der Ausführung einer Roboterbewegung bzw. bei deren Berechnung, lediglich auf die aktuelle Objekttabelle zuzugreifen braucht.

Anstelle der Darstellung der Objektbereiche durch einzelne Raumelemente können Begrenzungen von Objektbereichen auch direkt in einer Objekttabelle abgespeichert werden. Dies ist durch ein Verfahren zur kollisionsvermeidenden Steuerung von aufgabenorientiert programmierten Robotern mit folgenden Merkmalen möglich:

a) Im Arbeitsraum eines Roboters werden Objektbereiche, die vom Roboter aufgrund von möglichen Objekten im Arbeitsraum nicht erreichbar sind lokalisiert,

b) die Objektbereiche werden in einem roboterspezifischen Koordinatensystem beschrieben,

c) die Begrenzungen eines Objektbereichs werden in einer Objekttabelle gespeichert,

d) bei der Ausführung einer Roboterbewegung werden von der Robotersteuerung aus der Objekttabelle die Objektbereiche die in der Bewegungsbahn des Roboters liegen, kollisionsvermeidend berücksichtigt.

Auch bei diesen Verfahren läßt sich nach einer vorteilhaften Ausführungsform, die dadurch gekennzeichnet ist, daß mindestens zwei aneinander angrenzende Objektbereiche zu einem Objektbereich zusammengefaßt werden, der Speicherplatzbedarf minimieren.

Ein weiteres Ziel der Erfindung ist es eine Reduzierung der Rechenzeit für eine Bahnplanung eines aufgabenorientiert programmierten Roboters durch eine Darstellung von Objekten mittels Elementarzellen im Arbeitsraum und Konfigurationsraum eines Roboters zu erreichen.

In dem Aufsatz "Transformation of Obstacles into Configuration Space by using a special Look-Up-Table for Collision-Free On-Line Path-Planning", von P.Adolphs und G.Höhn, der zur ICCON-Konferenz die im April 1989 in Jerusalem stattfand veröffentlicht wurde, ist ein Verfahren vorgeschlagen worden, mit dem die Rechenzeiten von aufgabenorientiert programmierten Robotern reduziert werden können. Dabei wird der Arbeitsraum des Roboters bezüglich eines Zylinderkoordinatensystems in Arbeitsraum-Elementarzellen, im folgenden A-Elementarzellen, unterteilt. Ein Zylinderkoordinatensystem bietet sich zu diesem Zweck für die meisten Roboter an, ist aber nicht zwingend erforderlich. Entscheidendes Kriterium bei der Wahl des Koordinatensystems ist, daß für die Einteilung des Arbeitsraums in A-Elementarzellen aufgrund von Symmetriebedingungen des Roboters möglichst einfache Algorithmen verwendet werden können.

Alle A-Elementarzellen die vom Roboter durch mindestens eine Gelenkkonfiguration erreichbar sind, bilden als Konfigurationsraum-Elementarzellen, im folgenden K-Elementarzellen, den Konfigurationsraum des Roboters. Die Gelenkkonfiguration berücksichtigt dabei, daß der Roboter einen Raumpunkt oder eine A-Elementarzelle des Arbeitsraums durch verschiedene Gelenkwinkelstellungen erreichen kann. Der Konfigurationsraum hat damit zwar die gleiche räumliche Ausdehnung wie der Arbeitsraum, weist aber im Regelfall deutlich mehr K-Elementarzellen auf.

Unter der Annahme, daß eine jeweilige A-Elementarzelle ein elementares Objekt für den Roboter darstellt, werden alle K-Elementarzellen, die bedingt durch das elementare Objekt vom Roboter nicht erreichbar sind, in einer allgemeinen Objekttabelle gespeichert. Elementares Objekt bedeutet hier soviel wie ein materielles Hindernis in der Größe einer A-Elementarzelle. Würde sich ein solches elementares Objekt im Arbeitsraum des Roboters befinden, so kann es sein, daß der Roboter einen bestimmten Bereich nicht mehr erreichen kann, weil das elementare Objekt für eine seiner Achsen oder Extremitäten ein Hindernis darstellt. Ein tatsächliches oder aktuelles Objekt kann dann durch eine Anzahl von A-Elementarzellen beschrieben werden, so daß über die Objekttabelle alle K-Elementarzellen ermittelt werden können, die der Roboter nicht erreichen bzw. bei einer vorzunehmenden Bahnplanung vermeiden muß. Die Größe der allgemeinen Objekttabelle und damit der Speicherplatz können dabei enorme Ausmaße annehmen; außerdem steigt die Rechenzeit proportional zur Größe der allgemeinen Objekttabelle.

Nach dem im genannten Stand der Technik vorgeschlagenen Verfahren läßt sich eine Reduzierung der Rechenzeiten dadurch erreichen, daß die allgemeine Objekttabelle minimiert wird, indem

- alle in einer jeweiligen Z-Ebene befindlichen K-Elementarzellen, die bedingt durch ein elementares Objekt in einem Winkelbereich nicht erreichbar sind, als Kollisionsintervall-Bereiche und

- alle, bezüglich der Koordinaten R und Z benachbarte Kollisionsintervalle mit gleichem Winkelbereich zu Flächenbereichen zusammengefaßt werden, wobei

- am Einsatzort des Roboters alle aktuellen Objekte im Arbeitsraum des Roboters durch A-Elementarzellen beschrieben und die dazugehörigen aktuellen K-Elementarzellen bzw. aktuellen Elementarzellenbereiche aus der allgemeinen Objekttabelle der Robotersteuerung zur Verfügung gestellt werden und wobei

- bei der Ausführung einer Roboterbewegung von der Robotersteuerung - auch im on-line-Betrieb - die aktuellen Elementarzellen bzw. aktuellen Elementarzellenbereiche kollisionsvermeidend berücksichtigt werden.

Eine weitere Reduzierung der Rechenzeit kann dadurch erreicht werden, daß von einem jeweiligen K-Elementarzellenbereich lediglich die K-Elementarzellen die den Rand dieses Bereiches bilden, in der allgemeinen Objekttabelle gespeichert werden.

Die Rechenzeit läßt sich vorteilhaft auch dadurch reduzieren, daß von den zu einer ersten A-Elementarzelle gehörenden K-Elementarzellen eines ersten K-Elementarzellenbereichs, die mit den zu einer zweiten A-Elementarzelle gehörenden K-Elementarzellen eines zweiten K-Elementarzellenbereiches teilweise identisch sind, die nichtidentischen K-Elementarzellen in einer Differenz-Objekttabelle gespeichert werden, wobei am jeweiligen Einsatzort des Roboters die zu einem aktuellen Objekt gehörenden aktuellen K-Elementarzellen bzw. aktuellen K-Elementarzellenbereiche aus der allgemeinen Objekttabelle und der Differenz-Objekttabelle bestimmbar sind.

Durch eine weitere vorteilhafte Ausbildung der Erfindung läßt sich das Verfahren auch dann anwenden, wenn sich örtlich veränderbare Objekte im Arbeitsraum des Roboters befinden. Ist ein Objekt so mobil, daß es sich im Arbeitsraum des Roboters wesentlich verändern oder sogar den Arbeitsraum des Roboters verlassen kann, so sind natürlich die einmal aus diesem aktuellen Objekt ermittelten K-Elementarzellen hinfällig geworden und müssen aus der aktuellen Objekttabelle gelöscht werden, wogegen die neu vom Objekt eingenommenen Bereiche wieder in K-Elementarzellenbereiche transformiert werden müssen.

Ein vorteilhaftes Verfahren zur Berücksichtigung der Mobilität der aktuellen Objekte ist dadurch gekennzeichnet, daß

- die aktuellen Objekte nach ihrer Mobilität gruppiert werden, wobei einer jeweiligen Gruppe von aktuellen Objekten eine Priorität zugeordnet wird,
- jede aktuelle K-Elementarzelle die Priorität des Objekts erhält, aus dem sie ermittelt wurde,
- immer wenn ein aktuelles Objekt seinen bisherigen Ort verläßt, alle aktuellen K-Elementarzellen, die die gleiche oder eine geringere Priorität aufweisen, aus der aktuellen Objekttabelle gelöscht werden,
- alle verbleibenden aktuellen Objekte mit gleicher oder geringerer Priorität wieder in die aktuelle Objekttabelle transformiert werden.

Dabei ist es vorteilhaft, wenn einer aktuellen K-Elementarzelle, die aus mindestens zwei aktuellen Objekten unterschiedlicher Priorität ermittelt wurde, die Priorität des aktuellen Objektes mit dem geringsten Mobilitätsgrad zugeordnet wird.

Bei der Gruppierung der aktuellen Objekte können beispielsweise folgende Objekte zu einer Gruppe zusammengefaßt werden

- statische, festmontierte Objekte, wie z.B. Maschinen und Anlagenteile,
- statische Objekte, die ihren Standplatz ändern können z.B. Paletten mit Werkstücken,
- bewegliche Objekte, deren Bewegungen von vornherein bekannt sind z.B. Werkstücke auf einem Fließband,
- bewegliche Objekte, deren Bewegungen unbekannt sind wie z.B. Personen, die sich im Arbeitsraum des Roboters aufhalten.

Ein Ausführungsbeispiel der Erfindung wird anhand der Zeichnung beschrieben. Dabei zeigen:

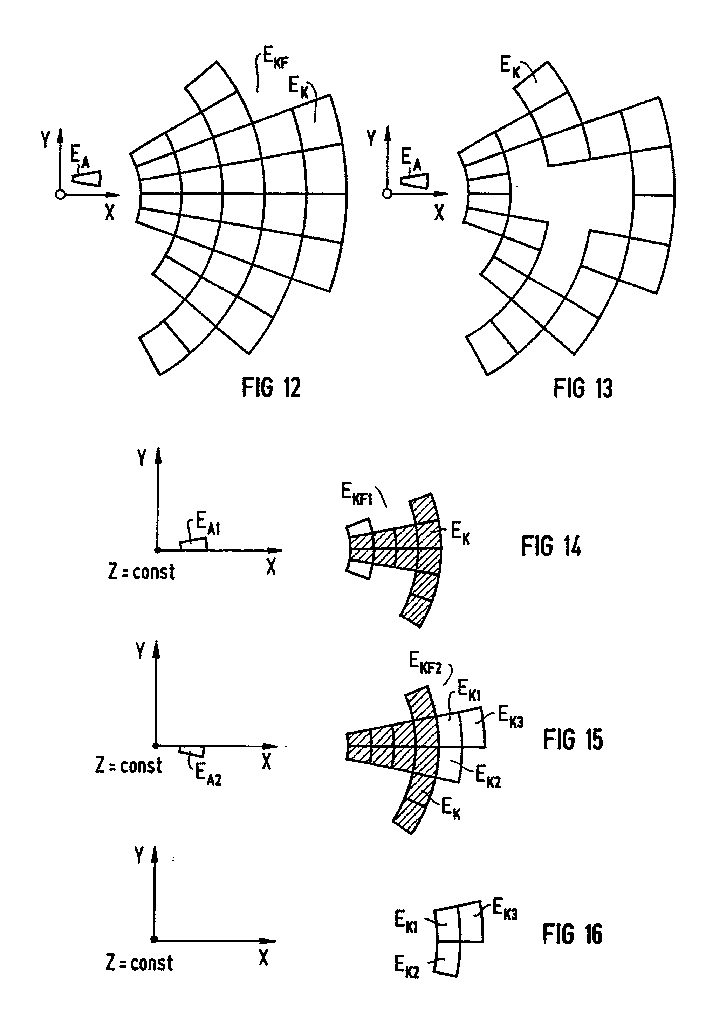

FIG 1
einen Roboter mit Bezugskoordinatensystem,
FIG 2 bis FIG 5
schematische Darstellungen verschiedener Gelenkstellungen eines Roboters,
FIG 6
eine schematische Darstellung eines Roboters, eines Objektes und eines Objektbereiches,
FIG 7
eine Elementarzelle,
FIG 8
die Beschreibung eines aktuellen Objekts durch Arbeitsraumelementarzellen,
FIG 9

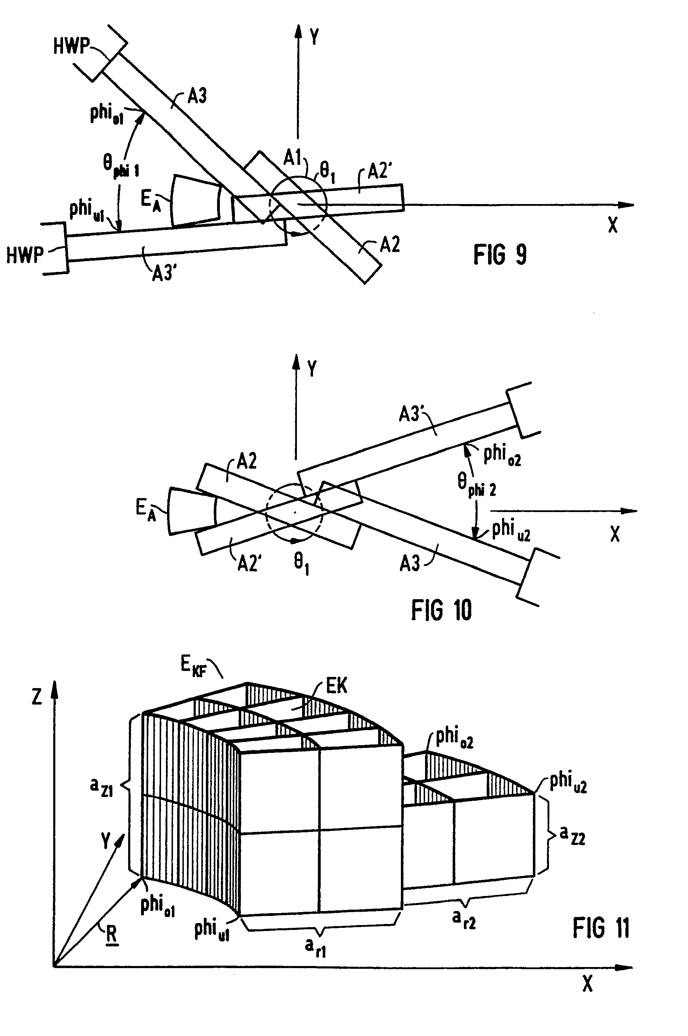

und FIG 10 eine Elementarzelle im Winkelbereich von Roboterachsen,
FIG 11
einen Elementarzellenbereich,
FIG 12
die Projektion eines Elementarzellenbereichs auf die X-, Y-Ebene,
FIG 13
einen Elementarzellen-Randbereich,
FIG 14
bis FIG 16 die Entstehung einer Differenzobjekttabelle.

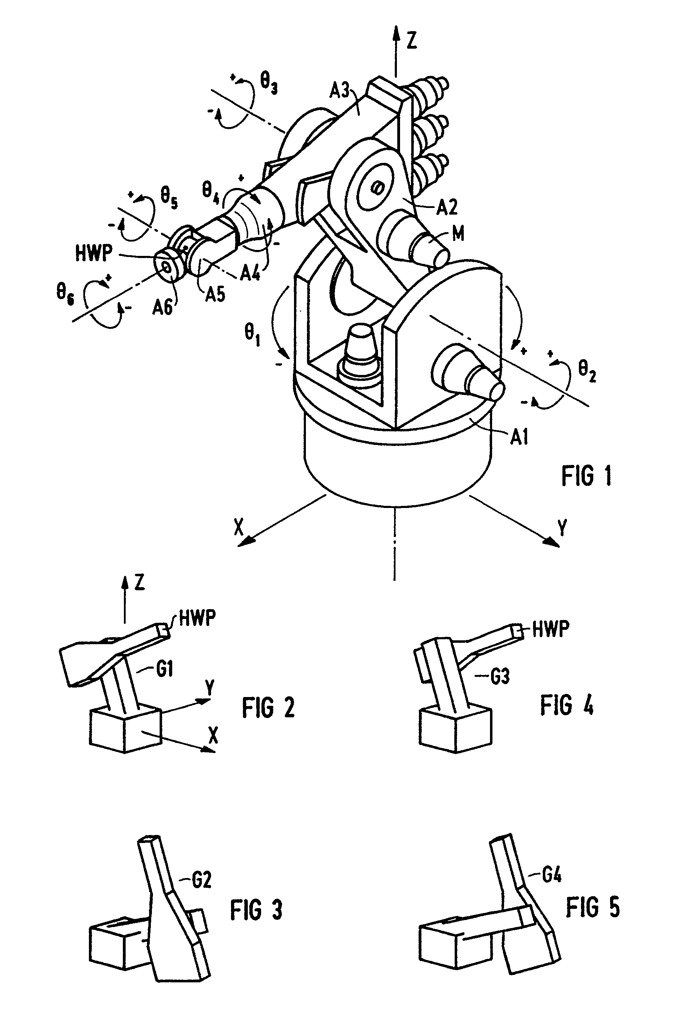

FIG 1 zeigt einen sechsachsigen Roboter dessen Achsen A1...A6 über die Gelenkwinkel $\theta 1$ bis $\theta 6$ mittels der Motoren M einstellbar sind. Dem Roboter ist ein rechtwinkliges kartesisches Koordinatensystem mit den Koordinaten X, Y und Z zugeordnet. Durch die Symmetrie des hier gezeigten Roboters bezüglich der Z-Achse läßt sich der Arbeitsraum des Roboters vorteilhaft in Zylinderkoordinaten beschreiben. Eine Beschreibung des Arbeitsraums in Zylinderkoordinaten ist jedoch nicht notwendige Voraussetzung zur Durchführung des Verfahrens. Für konstruktiv anders aufgebaute Roboter könnte eine Beschreibung des Arbeitsraumes in einem anderen Koordinatensystem besser geeignet sein.

Zur Vereinfachung des Verfahrens ist es vorteilhaft, die komplexe Form des Roboters durch geeignete Hüllkörper (der Übersichtlichkeit halber nicht dargestellt) zu beschreiben. Beispielsweise können die drei Hauptgelenke durch eine beliebig zu spezifizierende Anzahl von Prismen die in Gelenkrichtung verlaufen, approximiert werden. Der gesamte Arbeitsraum der drei Handachsen A4...A6 kann durch eine umschließende Hüllkugel (ebenfalls nicht dargestellt) beschrieben werden.

Damit ist zugleich festgelegt, daß sich die Gestalt des Robotermodells lediglich in Abhängigkeit der Achsen A1...A3 verändert. Der Schnittpunkt der drei Handachsen A4...A6 wird im folgenden mit Handwurzelpunkt HWP bezeichnet. Der Handwurzelpunkt HWP kann also durch Verstellen der Gelenkwinkel $\theta$1...$\theta$3 im Arbeitsraum des Roboters positioniert werden.

Die Figuren 2 bis 5 zeigen einen Roboter dessen komplexe geometrische Form auf die wesentlichen Elemente reduziert ist. Es ist erkennbar, daß der Roboter bzw. der Handwurzelpunkt HWP des Roboters durch maximal vier verschiedene Gelenkstellungen G1 ...G4 auf jeweils den gleichen Punkt bzw. Bereich bezüglich des Koordinatensystems positioniert werden kann.

Befindet sich im Arbeitsraum des Roboters ein Objekt, so kann der Roboter in Abhängigkeit von seinem konstruktiven Aufbau bestimmte Bereiche seines Arbeitsraumes nicht mehr erreichen, da er durch dieses Objekt daran gehindert wird.

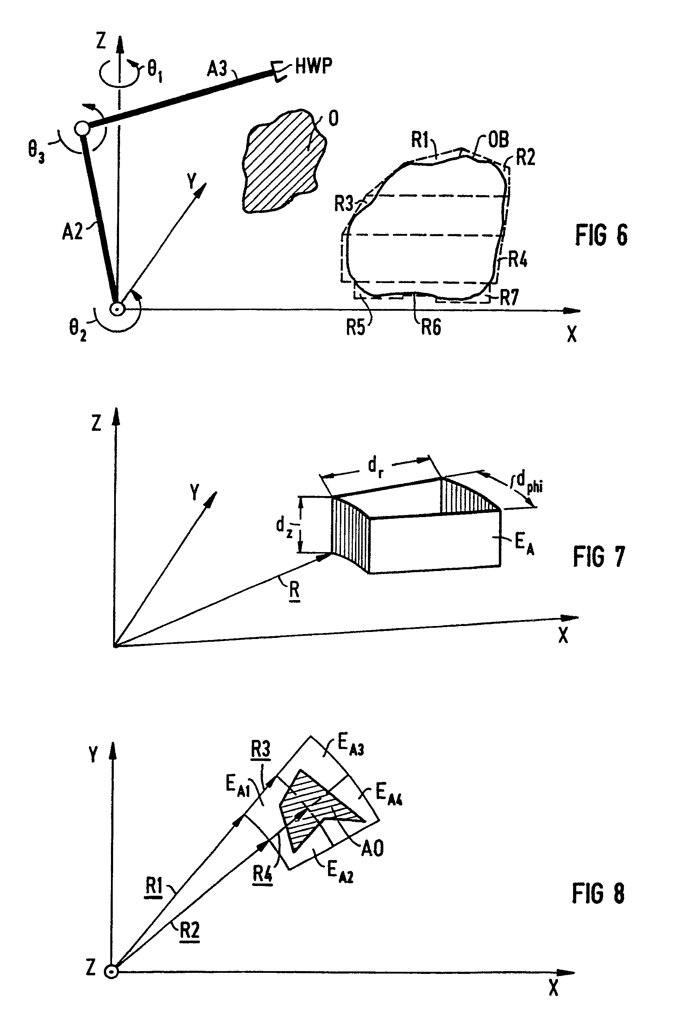

FIG 6 zeigt eine schematische Darstellung eines Roboters, in dessen Arbeitsraum sich ein Objekt O befindet, sowie einen Objektbereich OB, der bedingt durch das Objekt O vom Roboter nicht mehr erreichbar ist. Das schraffiert gezeichnete Objekt O kann dabei beliebig geformt sein. Der Objektbereich OB (durchgezogene Linie) ist der gesamte Raum, den der Roboter durch Verstellen seiner Gelenkwinkel $\theta$1...$\theta$3 bedingt durch das Objekt O nicht mehr erreichen kann, also der Bereich, der gewissermaßen im Schattenbereich des Objekts O in Bezug auf den Roboter liegt.

Soll der Roboter sich nun selbsttätig im Arbeitsraum bewegen indem er beispielsweise ein Werkstück von einem Tisch zu einem Förderband bringen soll, so muß er natürlich alle Objekte O die sich im Arbeitsraum befinden, kennen, um sich eine Bewegungsbahn berechnen zu können, bei der er nicht an ein Objekt O stößt. Der Robotersteuerung werden dazu alle Objektbereiche OB, die im Abschattungsbereich eines Objekts O liegen, mitgeteilt. Die komplexe Form der Objektbereiche wird dabei in einzelne Raumelemente R1...R7 (gestrichelt dargestellt) unterteilt. Die Raumelemente R1...R7 können in verschiedener Größe vorgegeben werden und werden bausteinartig zusammengesetzt, so daß sie mindestens das gesamte Volumen des Objektbereichs OB einnehmen. Die Form der Raumelemente kann dabei so gewählt werden, daß sie sich im verwendeten Bezugskoordinatensystem einfach beschreiben lassen. Je größer die Raumelemente gewählt werden, umso weniger Aufwand bzw. Speicherplatzbedarf ist für die Erfassung des Objektbereichs OB notwendig. Die Raumelemente R1...R7 können dann in Form einer Objekttabelle über ein Speichermedium der Robotersteuerung zur Verfügung gestellt werden. Bei der Bahnplanung kann dann die Robotersteuerung auf die Objekttabelle zugreifen und erhält damit Kenntnis von allen Raumelementen R1...R7 die bei der Bahnplanung vermieden werden müssen, damit der Roboter nicht mit irgendeinem mechanischen Teil an ein Objekt O anstößt.

Es kann vorkommen, daß ein zweites Objekt, das in der Nähe eines anderen Objekts liegt, einen Objektbereich abschattet, der an den Objektbereich OB des ersten Objekts O angrenzt. In diesem Fall ist es zweckmäßig, beide Objektbereiche OB zusammenzufassen und den sich ergebenden Gesamtobjektbereich durch größere Raumelemente R1...R7 zu beschreiben.

Zur Reduzierung des Speicherplatzbedarfs ist es weiterhin möglich von den Raumelementen R1...R7 lediglich die Flächen oder Bereiche abzuspeichern, die gewissermaßen den Mantel des Objektbereichs OB bilden.

Falls es möglich ist, gesamte Objektbereiche OB im Bezugskoordinatensystems des Roboters zu erfassen, kann auch auf eine Darstellung des Objektbereichs OB durch Raumelemente R1...R7 verzichtet werden, und es können unmittelbar die Begrenzungen des Objektbereichs OB in der Objekttabelle gespeichert werden.

Zur Feststellung der Abschattungsbereiche also der Objektbereiche OB die durch ein Objekt O für den Roboter nicht erreichbar sind, läßt sich der Arbeitsraum in Elementarzellen zerlegen und zu jeder Elementarzelle der Objektbereich bestimmen. Ein solches Verfahren wird im folgenden anhand der Figuren 7 ff beschrieben.

FIG 7 zeigt eine der A-Elementarzellen $E_A$ in die der Arbeitsraum des Roboters eingeteilt wird. Eine jeweilige A-Elementarzelle $E_A$ wird durch den Vektor R in Zylinderkoordinaten (r,phi, z) und durch ihre Abmessungen $d_r$, $d_{phi}$, $d_z$ beschrieben. Der gesamte Arbeitsraum des Roboters stellt sich damit als eine Summe von A-Elementarzellen $E_A$ dar.

Wie anhand der Figuren 2 bis 5 bereits beschrieben wurde, kann ein Bereich im Arbeitsraum des Roboters bei der hier betrachteten elementaren Roboterkonfiguration maximal durch vier Gelenkstellungen G1 bis G4, also durch vier Konfigurationen des Roboters erreicht werden. Die A-Elementarzelle $E_A$ könnte also vom Roboter beispielsweise durch die vier Gelenkkonfigurationen G1 bis G4 erreicht werden. Alle Elementarzellen die durch eine bestimmte Gelenkkonfiguration G1...G4 des Roboters erreichbar sind, werden deshalb als Konfigurationsraum-Elementarzellen, im folgenden K-Elementarzellen $E_K$ beschrieben. Eine A-Elementarzelle $E_A$ die mit den Koordinaten (r,phi,z) adressiert werden kann, wird demnach im Konfigurationsraum K über die Koordinaten (r,phi,z,G1),- (r,phi,z,G2),(r,phi,z,G3),(r,phi,z, G4) angesprochen.

Zum Verständnis des Konfigurationsraumes kann man von der Vorstellung ausgehen, daß jede A-Elementarzelle $E_A$ ein ortsfestes materielles Hindernis für den Roboter darstellt. Bei einer auszuführenden Roboterbewegung darf der Roboter mit keiner seiner Extremitäten, also weder mit einer Achse A1...A6 noch mit einem Motor M oder einem sonstigen zur Robotergeometrie gehörenden Element, an die A-Elementarzelle $E_A$ stoßen. Damit ergibt sich zu jeder A-Elementarzelle $E_A$ eine verschieden große Anzahl von K-Elementarzellen $E_K$, die der Roboter wenigstens durch eine Gelenkstellung G1 bis G4 nicht erreichen kann, da er durch die A-Elementarzelle $E_A$ behindert ist. Diese, durch eine jeweilige A-Elementarzelle $E_A$ nicht erreichbaren K-Elementarzellen bilden den verbotenen Teil des Konfigurationsraums des Roboters.

Zur steuerungstechnischen Erfassung des Konfigurationsraums werden alle K-Elementarzellen $E_K$ in einem Speichermedium in Form einer allgemeinen Objekttabelle gespeichert. Die Aufteilung des Arbeitsraums eines jeweiligen Roboters in A-Elementarzellen $E_A$ und die Bildung der allgemeinen Objekttabelle kann dabei bereits vom Hersteller, also "off-line" vorgenommen werden, da sie lediglich abhängig ist von der speziellen Robotergeometrie.

Am Einsatzort des Roboters könnten nun die tatsächlich vorgefundenen Umweltbedingungen berücksichtigt werden, d.h. alle aktuellen Objekte die sich am Einsatzort des Roboters in dessen Arbeitsraum befinden - wie beispielsweise ein Förderband oder bewegliche Teile auf dem Förderband, ein Arbeitstisch und Personen im Arbeitsraum des Roboters -, können aus A-Elementarzellen $E_A$ zusammengesetzt gedacht werden.

FIG 8 zeigt wie ein aktuelles Objekt AO durch A-Elementarzellen $E_{A1}...E_{A4}$ beschrieben werden kann. Die A-Elementarzellen $E_{A1}...E_{A4}$ sind der Einfachheit halber auf eine X-,Y-Ebene bei Z = konstant projiziert. Ihre Lage wird durch die Vektoren R1...R4 beschrieben. Zu jeder der A-Elementarzellen $E_{A1}...E_{A4}$ könnte nun die Robotersteuerung für eine auszuführende Bewegung die K-Elementarzellen $E_K$ ermitteln und diese bei der Bewegung umgehen. Damit ist gewährleistet, daß bei der Roboterbewegung kein Teil des Roboters an ein aktuelles Hindernis stößt, da durch die Vermeidung der K-Elementarzellen $E_K$ automatisch die aktuellen Objekte AO vom Roboter umgangen werden.

Die allgemeine Objekttabelle hat jedoch einen sehr hohen Speicherplatzbedarf, so daß diese allgemeine Methode auf heutigen Rechnern nur sehr zeitaufwendig zu realisieren ist. Die Ausnutzung spezifischer Eigenschaften der allgemeinen Objekttabelle führt jedoch zu einer Reduzierung des Speicherplatzbedarfs und stellt somit ein realisierbares Konzept dar.

Die Figuren 9 und 10 zeigen eine erste Möglichkeit wie durch Ausnutzung der Arbeitsraumsymmetrie eine Reduzierung der allgemeinen Objekttabelle vorgenommen werden kann. Dabei handelt es sich um eine phi-Intervall-Beschreibung des Arbeitsraums des Roboters. Bei dieser Art der Darstellung macht man sich roboterspezifische Eigenschaften zunutze. Hält man die Achsen A2 und A3 auf konstanten Werten und verändert den Winkel $\theta 1$ der Achse A1, so daß der Handwurzelpunkt HWP bei Z = const. eine Drehung um den Winkel phi beschreibt, so können die Bereiche von $\theta 1$ bzw. phi in denen eine Kollision zwischen den Roboterachsen A2 bzw.A3 und der Elementarzelle $E_A$ auftreten würde, durch eine diskrete Anzahl von Winkelintervallen $\theta_{phi1}, \theta_{phi2}$ beschrieben werden.

Aus FIG 9 ist ersichtlich, daß die A-Elementarzelle $E_A$ die Roboterachse A3 in einem Bereich $\theta_{phi1}$ behindert. Wie in FIG 10 zu sehen ist, behindert die gleiche Elementarzelle $E_A$ die Achse A2 in einem weiteren Winkelbereich $\theta_{phi2}$. Die Anzahl der Winkelintervalle $\theta_{phi1}$, $\theta_{phi2}$ hängt dabei vom konstruktiven Aufbau des Roboters ab. Bei dem in den Figuren 9 und 10 zugrundegelegten Robotertyp sowie für die meisten Roboter reichen jedoch jeweils zwei Winkelbereiche $\theta_{phi1}, \theta_{phi2}$ aus.

In der allgemeinen Objekttabelle müssen die durch die A-Elementarzelle $E_A$ nicht erreichbaren K-Elementarzellen $E_K$ nicht einzeln abgespeichert werden, sondern können als Kollisionsintervallbereiche mit den Intervallgrenzen $\theta_{phi} = |phi_u, phi_o|$ abgespeichert werden. Die mathematische Beschreibung dazu lautet:

$$((r, |phi_u, phi_o|, z, G)|i = 1,...,m_j) = f ((r,z)_j)$$

wobei $|phi_u, phi_o|$ die Intervallgrenzen für einen jeweiligen Kollisionsintervall-Bereich angeben.

In FIG 11 ist nun dargestellt, wie sich der Speicherplatz für die allgemeine Objekttabelle so weitgehend reduzieren läßt, daß eine Anwendung mit heutigen Rechnern ermöglicht wird. Dabei werden die Kollisionsintervall-Bereiche mit gleichem Intervallbereich $|phi_u, phi_o|$ zusammengefaßt und in der Form

$$(r, |phi_u, Phi_o|z, a_r, a_z, G)$$

beschrieben. Die Koordinaten r, z des Vektors R geben dabei den Ort der Elementarzelle $E_K$ in der linken unteren Ecke des Flächenbererichs an und durch die Abstände $a_r$, $a_z$ wird die Ausdehung eines jeweiligen Flächenbereichs beschrieben.

Aus den Figuren 12 und 13 läßt sich eine weitere Möglichkeit zur Reduzierung der allgemeinen Objekttabelle entnehmen. In FIG 12 ist die Projektion eines Flächenbereiches $E_{KF}$ der aus einer A-Elementarzelle $E_A$ resultiert, auf die X-,Y-Ebene gezeigt. Da es einem Roboter nicht möglich ist, mit seinem Handwurzelpunkt auch nur eine der K-Elementarzellen $E_K$ des Elementarzellenflächenbereichs $E_{KF}$ zu erreichen, genügt es, in der allgemeinen Objekttabelle nur die den Gesamtbereich begrenzenden K-Elementarzellen $E_K$ zu beschreiben bzw. abzuspeichern, wie dies in FIG 12 veranschaulicht ist.

Bei genauerer Betrachtung des Inhalts der allgemeinen Objekttabelle erkennt man, daß die für den Roboter verbotenen Bereiche, die zu sehr dicht beeinanderliegenden A-Elementarzellen $E_A$ korrespondieren, nahezu identisch sind. Dies ermöglicht eine Rechenzeitreduktion bei der Transformation des Objektes in den Konfigurationsraum bei etwas erhöhtem Speicherplatzbedarf für eine zusätzliche Differenztabelle.

In FIG 14 ist - ebenfalls zur Vereinfachung der Darstellung - in einer X-,Y-Ebene bei Z = konstant eine A-Elementarzelle $E_{A1}$ und ein dazu korrespondierender K-Elementarzellenbereich $E_{KF1}$ gezeigt. FIG 15 zeigt in der gleichen X-, Y-Ebene eine zweite A-Elementarzelle $E_{A2}$ und den dazu korrespondierenden K-Elementarzellenbereich $E_{KF2}$. Ein Vergleich der K-Elementarzellenbereiche $E_{KF1/2}$ der Figuren 13 und 14 zeigt, daß die schraffierten K-Elementarzellen $E_K$ der beiden Bereiche $E_{KF1}$, $E_{KF2}$ identisch sind. Lediglich die K-Elementarzellen $E_{K1}...E_{K3}$, die zur A-Elementarzelle $E_{A2}$, FIG 14 korrespondieren, sind noch nicht im K-Elementarzellenbereich $E_{KF1}$ enthalten.

In FIG 16 sind die nicht im K-Elementarzellenbereich $E_{KF1}$ enthaltenen K-Elementarzellen $E_{K1}...E_{K3}$ dargestellt. Diese K-Elementarzellen $E_{K1}...E_{K3}$ werden in einer Differenz-Objekttabelle gespeichert. Bei der Transformation eines Objekts in den Konfigurationsraum wird also das Objekt durch einzelne A-Elementarzellen $E_A$ beschrieben und es werden nur zu einer A-Elementarzelle $E_A$ die K-Elementarzellen $E_K$ aus der allgemeinen Objekttabelle ermittelt. Alle weiteren K-Elementarzellen $E_{K1}... E_{K3}$ werden dann aus der Differenz-Objekttabelle ermittelt.

Eine Schwierigkeit bei der Anwendung des Verfahrens ist das Entfernen von Objekten aus der Objekttabelle. Dies ist sowohl im Hinblick auf die Einbeziehung von statischen Objekten, die ihren Standplatz ändern können, als auch von beweglichen Objekten notwendig. In beiden Fällen muß die Objekttabelle schnell an Änderungen in der Umwelt angepaßt werden.

Dabei ist eine eindeutige Zuordnung der K-Elementarzellen $E_K$ zu den korrespondierenden Objekten im Arbeitsraum wichtig. Eine spezielle Kennung im Konfigurationsraum, die genau beschreibt, welche aktuellen Objekte zu den K-Elementarzellen $E_K$ geführt haben, ist aus Speicherplatzgründen kaum zu realisieren. Daher wird hier ein Weg über die Vergabe von Prioritäten an alle Objekte vorgeschlagen die Aufschluß über den Mobilitätsgrad der Objekte gibt. Dabei kann die höchste Priorität statischen, festmontierten Objekten und die niedrigste Priorität den am schnellsten beweglichen Objekten zugeordnet werden.

Bei der Transformation eines aktuellen Objekts in den Konfigurationsraum erhalten alle K-Elementarzellen $E_K$ die Priorität des korrespondierenden Objektes. Soll ein Objekt aus der Objekttabelle gelöscht werden, beispielsweise weil es den Arbeitsraum des Roboters oder seinen Ort im Arbeitsraum verändert, so werden alle K-Elementarzellen, die die gleiche oder geringere Priorität aufweisen aus der allgemeinen Objekttabelle gelöscht und anschließend alle noch vorhandenen Objekte mit der gleichen oder einer geringeren Priorität wieder in den Konfigurationsraum transformiert.

Wird eine K-Elementarzelle aufgrund mehrerer Objekte als belegt markiert, so erhält sie die Priorität desjenigen Objektes mit der höchsten Priorität.

Der Vorteil der Prioritätsvergabe besteht darin, das beim häufig stattfindenden Löschen von Objekten mit niedriger Priorität, also hohem Mobilitätsgrad, nur relativ wenig Rechenzeit benötigt wird.

**Patentansprüche**

1. Verfahren zur kollisionsvermeidenden Steuerung von aufgabenorientiert programmierten Robotern mit folgenden Merkmalen:

   a) Im Arbeitsraum des Roboters werden Objektbereiche (OB), die vom Roboter aufgrund von möglichen Objekten (O) im Arbeitsraum nicht erreichbar sind, lokalisiert,

   b) jeder Objektbereich (OB) wird durch verschieden große, vorgebbare Raumelemente (R1...R7) so beschrieben, daß die Anzahl der Raumelemente (R1...R7) minimiert ist,

   c) die Raumelemente (R1...R7) werden in einer Objekttabelle abgespeichert,

   d) bei der Ausführung einer Roboterbewegung werden von der Robotersteuerung aus der Objekttabelle die Raumelemente (R1...R7) die in der Bewegungsbahn des Roboters liegen, kollisionsvermeidend berücksichtigt.

2. Verfahren nach Anspruch 1, **dadurch gekennzeichnet,** daß mindestens zwei aneinander angrenzende Objektbereiche (OB) zu einem Objektbereich (OB) zusammengefaßt werden.

3. Verfahren nach einem der vorstehenden Ansprüche, **dadurch gekennzeichnet,** daß nur die Abmessungen der Raumelemente (R1...R7) in der Objekttabelle gespeichert werden, die die Oberfläche des durch die Raumelemente (R1...R7) eingenommene Volumens bilden.

4. Verfahren nach einem der vorstehenden Ansprüche, **dadurch gekennzeichnet**, daß die Raumelemente (R1...R7), die zu aktuellen Objekten (O) im Arbeitsraum des Roboters korrespondieren, in einer aktuellen Objekttabelle gespeichert werden.

5. Verfahren zur kollisionsvermeidenden Steuerung von aufgabenorientiert programmierten Robotern mit folgenden Merkmalen:

a) Im Arbeitsraum eines Roboters werden Objektbereiche (OB), vom Roboter aufgrund von möglichen Objekten (O) im Arbeitsraum nicht erreichbar sind, lokalisiert,

b) die Objektbereiche (OB) werden in einem roboterspezifischen Koordinatensystem beschrieben,

c) die Begrenzungen eines Objektbereichs (OB) werden in einer Objekttabelle gespeichert,

d) bei der Ausführung einer Roboterbewegung werden von der Robotersteuerung aus der Objekttabelle die Objektbereiche (OB) die in der Bewegungsbahn des Roboters liegen, kollisionsvermeidend berücksichtigt.

6. Verfahren nach Anspruch 5, **dadurch gekennzeichnet**, daß mindestens zwei aneinander angrenzende Objektbereiche (OB) zu einem Objektbereich (OB) zusammengefaßt werden.

7. Verfahren zur kollisionsvermeidenden Steuerung von aufgabenorientiert programmierten Robotern mit folgenden Merkmalen:

a) Der Arbeitsraum eines Roboters wird bezüglich eines Zylinderkoordinatensystems $(r,phi,z)$ in Arbeitsraum-Elementarzellen $(E_A)$ unterteilt,

b) alle A-Elementarzellen $(E_A)$ die vom Roboter durch mindestens eine Gelenkkonfigurartion $(G_l)$ erreichbar sind, bilden als K-Elementarzellen $(E_K)$ mit den Koordinaten $(r,phi, z,G_l)$ den Konfigurationsraum (K) des Roboters,

c) unter der Annahme, daß eine jeweilige A-Elementarzelle $(E_A)$ ein elementares Objekt für den Roboter darstellt, werden alle K-Elementarzellen $(E_K)$, die bedingt durch das elementare Objekt vom Roboter nicht erreichbar sind, in einer allgemeinen Objekttabelle gespeichert,

d) die allgemeine Objekttabelle wird reduziert, indem

d1) alle in einer jeweiligen z-Ebene befindlichen K-Elementarzellen $(E_K)$, die bedingt durch ein elementares Objekt in einem Winkelbereich $(|phi_u,phi_o|)$ nicht erreichbar sind, als Kollisionsintervall-Bereiche $(E_{KB})$ und

d2) alle, bezüglich der Koordinaten r und z benachbarte Kollisionsintervalle mit gleichem Winkelbereich $(|phi_u,phi_o|)$ mit den Koordinaten $(r,|phi_u,phi_o|,z,ar,az,G_l)$ zu Flächenbereichen $(E_{KF})$ zusammengefaßt werden, wobei dr,dz die Ausdehnung des Flächenbereichs in r- und z-Richtung angeben,

e) am Einsatzort des Roboters werden alle aktuellen Objekte im Arbeitsraum des Roboters durch A-Elementarzellen beschrieben und die dazugehörigen aktuellen K-Elementarzellen $(E_{Ka})$ bzw. aktuellen Elementarzellenbereiche $(E_{KBa},E_{KFa})$ aus der allgemeinen Objekttabelle der Robotersteuerung zur Verfügung gestellt,

f) bei der Ausführung einer Roboterbewegung werden von der Robotersteuerung die aktuellen Elementarzellen $(E_{KA})$ bzw. aktuellen Elementarzellenbereiche $(E_{KBA},E_{KFA})$ kollisionsvermeidend berücksichtigt.

8. Verfahren nach Anspruch 7, **dadurch gekennzeichnet**, daß von einem jeweiligen K-Elementarzellenbereich $(E_{KB},E_{KF})$ lediglich die K-Elementarzellen, die den Rand dieses Bereiches bilden in der allgemeinen Objekttabelle gespeichert werden.

9. Verfahren nach Anspruch 7 oder 8, **dadurch gekennzeichnet,** daß von den zu einer ersten A-Elementarzelle $(E_A)$ gehörenden K-Elementarzellen $(E_K)$ eines ersten K-Elementarzellenbereiches $(E_{KB1},E_{KF1})$, die mit den zu einer zweiten A-Elementarzelle $(E_A)$ gehörenden K-Elementarzellen $(E_K)$ eines zweiten K-Elementarzellenbereiches $(E_{KB2},E_{KF2})$ teilweise identisch sind, die nichtidentischen K-Elementarzellen $(E_K)$ in einer Differenz-Objekttabelle gespeichert werden, wobei am jeweiligen Einsatzort des Roboters die zu einem aktuellen Objekt gehörenden aktuellen K-Elementarzellen $(E_{KA})$ bzw. aktuellen K-Elementarzellenbereiche $(E_{KBA},E_{KFA})$ aus der allgemeinen Objekttabelle und der Differenz-Objekttabelle bestimmbar sind.

10. Verfahren nach einem der Ansprüche 7 bis 9, **dadurch gekennzeichnet,** daß

a) die aktuellen Objekte nach ihrer Mobilität gruppiert werden, wobei einer jeweiligen Gruppe von aktuellen Objekten eine Priorität (P1...P4) zugeordnet wird,

b) jede aktuelle K-Elementarzelle $(E_{Ka})$ die Priorität des Objekts erhält, aus dem sie ermittelt wurde,

c) immer wenn ein aktuelles Objekt seinen bisherigen Ort verläßt, alle aktuellen K-Elementarzellen ($E_{Ka}$) die die gleiche oder eine geringere Priorität (P1.. .P4) aufweisen, aus der aktuellen Objekttabelle gelöscht werden,

d) alle verbleibenden aktuellen Objekte mit gleicher oder geringerer Priorität (P1.. .P4) wieder in die aktuelle Objekttabelle transformiert werden.

11. Verfahren nach Anspruch 10, **dadurch gekennzeichnet**, daß einer aktuellen K-Elementarzelle ($E_{KA}$), die aus mindestens zwei aktuellen Objekten unterschiedlicher Priorität (P1...P4) ermittelt wurde, die Priorität (P1...P4) des aktuellen Objektes mit dem geringsten Mobilitätsgrad zugeordnet wird.

FIG 1

FIG 2

FIG 3

FIG 4

FIG 5

FIG 6

FIG 7

FIG 8

FIG 9

FIG 10

FIG 11

FIG 12

FIG 13

FIG 14

FIG 15

FIG 16

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,Y | ICCON Conference<br>April 1989, New York, USA<br>Seiten 1 - 6; P. Adolphs et al:<br>"Transformartion of obstacles into configuration space by using look-up table for collision-free on-line path-planning"<br>* das ganze Dokument *<br>--- | 1, 3-5, 7 | G05B19/405 |
| Y | Electronics & Communication Engineering Journal<br>vol. 1, no. 5, Oktober 1989, LONDON GB<br>Seiten 196 - 204; N.D. Duffy et al:<br>"Anticollision techniques in multirobot environments"<br>* Seite 200, Absatz 4; Figur 6 *<br>--- | 1, 3-5, 7 | |
| A | EP-A-153556 (DR.JOHANNES HEIDENHEIM)<br>* Seite 4, Zeile 20 - Seite 7, Zeile 12 *<br>* Figuren 1a-1d, 2a-2d *<br>----- | 8, 10 | |

|   |   |
|---|---|
| | **RECHERCHIERTE SACHGEBIETE (Int. Cl.5 )**<br><br>G05B<br>B25J |

Der vorliegende Recherchenbericht wurde für alle Patentansprüche erstellt

| Recherchenort | Abschlußdatum der Recherche | Prüfer |
|---|---|---|
| DEN HAAG | 26 SEPTEMBER 1990 | NETTESHEIM J. |

EPO FORM 1503 03.82 (P0403)